# DEMANDE DE BREVET EUROPEEN

(11) **EP 3 435 142 A1**
(43) Date de publication de la demande: **30.01.2019**
(21) Numéro de dépôt: 18184815.1
(22) Date de dépôt: 20.07.2018
(51) Int. Cl.: G02C 5/22

(54) **ARTICULATION DE MONTURE DE LUNETTES**

(30) Priorité: 24.07.2017 FR 1770789
(71) Demandeur: Parasite Design, 01150 Saint Vulbas (FR)
(72) Inventeur: MARTIN, Hugo, 69300 CALUIRE-ET-CUIRE (FR)
(74) Mandataire: Cabinet Bleger-Rhein-Poupon

(57) **Abrégé**

Articulation 5 de monture de lunettes 2 pivotant selon un plan de rotation P, comportant une partie femelle 7 accueillant une partie mâle 6,
- la partie mâle 6 comportant :
- des arbres 62 sensiblement perpendiculaires au plan P et diamétralement opposés entre eux,
- un organe de rappel élastique 81 qui au repos est sensiblement en contact avec les arbres 62,

- la partie femelle comportant :
- des gouttières 91 formant des moyens d'accès 9 des arbres 62 depuis l'extérieur de la partie femelle 7 vers des logements 72 dans lesquels les arbres 62 pivotent,
- au moins une surface d'appui extérieure 82,83 coopérant avec l'organe de rappel élastique 81 pour former des moyens d'indexation 8 de l'articulation 5,

- la/les surface(s) d'appui extérieure(s) 82,83 et les gouttières 91 formant des guides d'écartement de l'organe de rappel élastique 81 par rapport aux arbres 62.

## Description

La présente invention concerne une articulation de monture de lunettes, une monture de lunettes la comportant et une paire de lunettes comportant une telle monture et une telle articulation.

Une monture de lunettes désigne un produit semi-fini ne présentant pas toutes les finitions ni les montages de verres adaptés.

Une paire de lunettes comporte une monture de lunettes finie et est équipée de verres.

Par monture de lunettes on désigne une structure comportant une façade et au moins une branche reliée à cette façade par une articulation, la façade étant destinée à être positionnée devant le visage de l'utilisateur principalement au niveau de ses yeux.

La monture de lunettes est destinée à recevoir un ou des verres optiques et/ou solaires et/ou de protection pour les yeux.

La monture de lunettes peut de manière alternative être destinée à supporter par exemple des dispositifs de pulvérisation de produits médicaux afin d'humidifier les yeux du porteur, ou supporter des dispositifs de luminothérapie, ou comportant des moyens d'affichage d'informations, de même que des dispositifs d'enregistrement ou de restitution multimédia.

La monture de lunettes peut également être destinée à supporter des moyens de protection type visière, ou verre opaque ajouré, ou tout autre dispositif nécessitant d'être placé devant ou à proximité de l'oeil ou des yeux d'un utilisateur.

La monture de lunettes comporte de manière connue une façade d'où est issu un tenon venu de matière ou non à la partie de la façade dont il est rattaché, sur ce tenon étant rapportée une branche par l'intermédiaire d'une articulation.

De manière connue également, la façade de la monture de lunettes peut comporter une barre frontale ou non, et peut présenter en outre un recouvrement périphérique appelé cerclage total ou partiel du ou des verres par des cercles. Dans le cas d'un cerclage partiel du ou des verres, un fil polymère peut le compléter pour former une façade de monture désignée dans le domaine comme une « monture Nylor ».

La partie de barre frontale au-dessus du nez entre deux verres est appelée dans le domaine un pont.

La façade peut ne comporter que deux verres reliés entre eux par un pont venu de matière ou non des deux verres pour former un masque, chaque verre étant relié à une branche par un tenon réciproque pour former une monture dite dans le domaine « percée ».

La façade peut comporter au moins un appui sur le nez appelé plaquette supporté par au moins un porte-plaquette relié ou venu de matière au pont ou au verre auquel il est rattaché.

L'articulation de monture de lunettes relie la branche au tenon. Il est connu des montures de lunettes comportant une façade dont est issu un tenon coopérant avec une branche par une articulation pivotant autour d'une vis formant axe. L'articulation est alors constituée de manière connue par des charnons mâles et femelles emboîtés, dont au moins un charnon est connecté au tenon, et au moins un autre charnon est associé à la branche.

La monture de lunettes présente une position de placement sur le visage de l'utilisateur lorsque l'articulation est dite ouverte, la ou les branches s'étendant sensiblement perpendiculairement à la façade.

La monture de lunettes peut également présenter une position de rangement de la monture lorsque l'articulation est dite fermée, la ou les branches étant rabattues sensiblement parallèlement à la façade. Les positions ouverte et fermée de l'articulation peuvent correspondre de manière connue à des positions d'équilibre stables de l'articulation, le passage de l'une à l'autre se faisant en passant par une position d'équilibre instable intermédiaire. Celle-ci tend à ramener l'articulation vers une position d'équilibre stable ouverte et/ou fermée.

La mise en oeuvre de ce type d'articulation sur une monture d'une paire de lunettes nécessite de nombreuses petites pièces à assembler, ce qui génère des coûts importants. En outre, les articulations peuvent voir leurs vis se dévisser et tomber à l'usage, rendant inutilisable la paire de lunettes correspondante.

De plus les charnons et la vis de l'articulation sont visibles et présentent un encombrement qui interfère sur l'esthétisme de la monture et son aspect épuré.

La solution d'affiner l'articulation pour éviter des surépaisseurs présente l'inconvénient de la rendre fragile et donc susceptible de détérioration ou de rupture en cas de contraintes accidentelles exercées sur la monture.

La présente invention se veut de remédier aux inconvénients précédemment cités, en proposant une articulation de monture de lunettes simple à fabriquer, en peu de pièces et robuste, d'encombrement réduit et épurée permettant une grande latitude dans des apports esthétiques.

A cet effet, l'invention concerne une articulation de monture de lunettes pivotant autour d'un axe virtuel de rotation dans un plan de rotation, l'articulation pouvant relier un tenon d'une façade à une branche et comportant :
- une partie femelle accueillant une partie mâle, l'une pouvant être en lien avec le tenon et l'autre avec la branche,
- la partie mâle comportant des arbres sensiblement perpendiculaires au plan de rotation et diamétralement opposés entre eux,
- la partie mâle comportant en outre un organe de rappel élastique constitué d'au moins une lame à effet ressort qui au repos est sensiblement en contact avec les arbres,

- la partie femelle comportant des gouttières en regard l'une de l'autre formant des moyens d'accès des arbres depuis l'extérieur de la partie femelle vers des logements dans lesquels les arbres pivotent,
- la partie femelle comportant en outre au moins une surface d'appui extérieure coopérant avec l'organe de rappel élastique pour former des moyens d'indexation de l'articulation dans au moins une position d'équilibre stable,
- la ou les surface(s) d'appui extérieure(s) et les gouttières de la partie femelle formant également des guides d'écartement de l'organe de rappel élastique par rapport aux arbres.
Cela permet de réaliser une articulation de monture de lunettes sans vis, simple à réaliser et en peu de pièces.

Selon une première configuration possible, les arbres ont une forme générale de spatules plates. Cela permet d'avoir des gouttières correspondant pour l'accès des arbres aux logements plus étroites et d'avoir donc une partie femelle plus massive et donc plus robuste.

Selon une seconde configuration possible, chaque gouttière comporte deux portions successives d'axes principaux sécants et inclus dans le plan de rotation. Cela permet d'éviter un démontage involontaire de l'articulation, l'assemblage ou le démontage nécessitant d'effectuer deux mouvements successifs dans deux directions différentes.

Selon une troisième configuration possible, la partie femelle comporte une première surface d'appui extérieure coopérant avec l'organe de rappel élastique pour former des moyens d'indexation de l'articulation dans une position d'équilibre stable ouverte.

Selon une quatrième configuration possible, la partie femelle comporte une seconde surface d'appui extérieure conjointe à la première surface d'appui extérieure suivant une arête commune, ladite seconde surface d'appui coopérant avec l'organe de rappel élastique pour former des moyens d'indexation de l'articulation dans une position d'équilibre stable fermée. Cela permet d'obtenir une articulation présentant une seconde position stable fermée complémentaire à une première position stable ouverte.

Selon une cinquième configuration possible, l'arête entre la première et la seconde surface extérieure coopère avec l'organe de rappel élastique pour former des moyens d'indexation de l'articulation dans une position d'équilibre instable. Cela permet de réaliser simplement un rappel vers l'une des positions d'équilibre stable ouverte ou fermée.

Selon une sixième configuration possible, un doigt prolonge l'organe de rappel élastique en formant un angle avec celui-ci et il coopère avec une surface de la partie femelle située sensiblement à l'opposé de la partie mâle pour former avec l'organe de rappel élastique des moyens de verrouillage des arbres dans les logements lorsque l'articulation est en position ouverte.

Selon une septième configuration possible, la partie femelle est réalisée d'un seul tenant notamment par fabrication additive. Cela permet de réaliser la partie femelle simplement sans utiliser de moule.

Selon une huitième configuration possible, la partie mâle est réalisée d'un seul tenant à partir d'une plaque découpée, notamment par découpe laser ou découpe chimique. Cela permet de réaliser la partie mâle simplement sans utiliser de moule.

L'invention concerne également une monture de lunettes comportant une articulation selon l'une ou plusieurs des caractéristiques précédentes.

L'invention concerne en outre une paire de lunettes fabriquée avec une monture de lunettes comportant une articulation selon l'une ou plusieurs des caractéristiques précédentes.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue d'ensemble d'une paire de lunettes comportant la monture de lunettes de la figure 1, présentant une articulation en position ouverte et une articulation en position fermée,
- la figure 2 est une vue de dessus de la paire de lunettes de la figure 1,

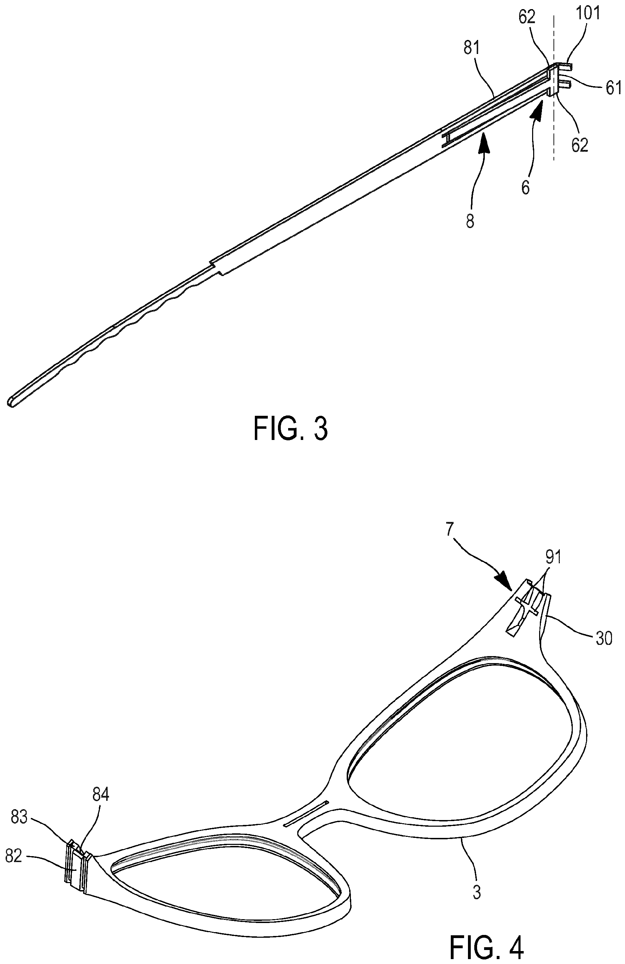

- la figure 3 est une vue isolée d'une branche comportant la partie mâle de l'articulation de monture de lunettes utilisée pour la paire de lunettes de la figure 1,
- la figure 4 est une vue isolée d'une façade de monture comportant la partie femelle de l'articulation de monture de lunettes utilisée pour la paire de lunettes de la figure 1,
- la figure 5 est une vue de détail en coupe partiellement transparente de la partie femelle de l'articulation de la figure 1,
- la figure 6 est une vue de détail de dessous de l'articulation de la figure 1 avec la partie mâle en cours d'assemblage dans la partie femelle selon une première étape.

Une monture de lunettes comportant l'articulation décrite ci-après est définie dans l'espace selon sa position d'utilisation, c'est-à-dire portée sur le visage d'un utilisateur (non illustré ici), l'articulation pivotant selon un axe sensiblement vertical. Les orientations se réfèrent à cette position.

La monture est considérée comme comportant une façade à l'avant et des branches disposées à l'arrière de cette dernière. La monture présente une face intérieure dirigée vers le centre de la monture.

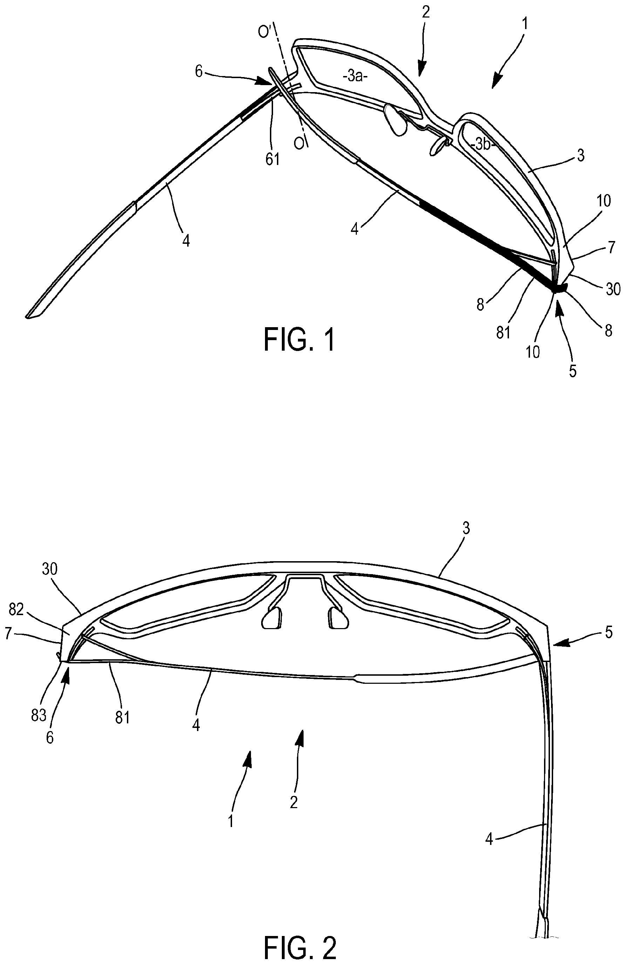

Un mode de réalisation de l'invention est illustré sur les figures 1 et suivantes.

Une paire de lunettes 1 comme illustré sur les figures 1 et 2 comporte une monture de lunettes 2 présentant une façade 3 et deux branches 4 de part et d'autre de la façade 3.

Chacune des branches 4 est reliée à un tenon 30 de la façade 3 par une articulation 5.

La monture de lunettes 2 est ici une monture cerclée avec deux verres 3a, 3b, mais elle peut également être une Nylor ou une percée comportant également au moins une articulation 5 reliant un tenon 30 de la façade 3 à une branche 4.

L'articulation 5 pivote selon un axe de rotation virtuel OO' selon une trajectoire incluse dans un plan de rotation P. Ce plan de rotation P est perpendiculaire à l'axe de rotation virtuel OO'. Cet axe de rotation OO' est sensiblement perpendiculaire à l'orientation principale de la branche 4.

L'articulation 5 comporte une partie mâle 6 et une partie femelle 7, l'une connectée au tenon 30 et l'autre à la branche 4. La partie mâle s'emboîte dans la partie femelle. Dans l'exemple illustré ici, la partie femelle 7 est venue de matière avec le tenon 30 de la façade 3, mais elle pourrait également être soudée, collée, vissée ou maintenue par tout autre moyen sur le tenon 30 selon un assemblage réversible ou non.

Dans l'exemple illustré ici, la partie mâle 6 est venue de matière avec la branche 4 à une de ses extrémités, mais elle pourrait également être soudée, collée, vissée ou maintenue par tout autre moyen sur la branche 4 selon un assemblage réversible ou non.

La partie mâle 6 est orientée selon un axe principal. Elle présente une première excroissance 61 selon l'axe principal de la partie mâle 6. A l'extrémité de cette excroissance 61 s'étendent, perpendiculaire à l'axe principal et dans des directions opposées, deux arbres 62 constituant substantiellement l'axe de rotation OO' de l'articulation 5.

La partie mâle 6 comporte également un organe de rappel élastique 81. Dans l'exemple de réalisation illustré ici, cet organe de rappel élastique 81 est constitué de deux lames présentant des caractéristiques de résilience leur donnant une fonction ressort, qui lorsqu'elles ne sont pas soumises à des contraintes, s'étendent sensiblement parallèlement à l'excroissance 61 de la partie mâle. Dans l'exemple illustré ici, la partie mâle 6 comporte deux lames ressort 81 parallèles entre elles, mais il peut être envisagé d'en n'avoir qu'une seule, ou un nombre plus important. Ces lames ressort 81 viennent en contact avec les arbres 62. Selon une alternative de réalisation, on peut positionner les lames ressort 81 en précontrainte contre les arbres 62. Cela permet alors d'accentuer les efforts de rappel élastiques des lames ressort 81 contre les arbres 62 lorsqu'ils sont écartés.

L'organe de rappel élastique 81 formé des lames ressort 81 en appui, sous contrainte ou non, contre les arbres 62 est dit « au repos ». Cet état au repos de l'organe de rappel élastique 81 est à opposer à son état une fois l'articulation 5 assemblée. En effet, une fois la partie mâle 6 assemblée dans la partie femelle 7, l'organe de rappel élastique 81 et les arbres 62 sont continuellement écartés par des moyens décrits plus loin.

Bien entendu, l'organe de rappel élastique 81 peut aussi être de toute forme, et par exemple être formé d'au moins une tige cylindrique à effet ressort plutôt qu'une lame.

On peut également réaliser l'organe de rappel élastique 81 en métal, en acier, en composite, en plastique, ou tout autre matériau pouvant fournir l'effet ressort recherché.

Dans l'exemple de réalisation illustré ici, la branche 4 a une forme générale d'une lame plate et longue et se poursuit d'un côté par une soie et de l'autre par la partie mâle 6. L'excroissance 61 de la partie mâle 6 présente alors aussi une forme aplatie. Les arbres 62 issus de l'excroissance 61 de la partie mâle 6 qui la prolongent sont eux aussi plats et sont en forme de spatules. Pour faciliter leur usage en tant qu'arbres de pivotement, tout ou partie des arêtes des arbres 62 peuvent être arrondies ou chanfreinées.

La partie femelle 7 est orientée selon un axe principal. Elle comporte une réservation 71 centrale dans laquelle la partie mâle 6 coopère par emboitement et pivotement. Cette réservation centrale 71 s'étend principalement selon l'axe principal de la partie femelle et est ouverte sur une des faces de la partie femelle.

A partir de cette réservation centrale 71 s'étendent deux logements 72 suivant un axe perpendiculaire à l'axe principal et dans des directions opposées. Ces deux logements 72 forment des paliers pour les arbres 62 de la partie mâle 6. La coopération des arbres 62 avec les logements 72 permet de faire pivoter la partie mâle 6 par rapport à la partie femelle 7 pour définir une articulation 5 pivotant d'une position ouverte à une position fermée et inversement. L'excroissance 61 de la partie mâle 6 pivote sans interférence dans la réservation 71 de la partie femelle 7 entre deux butées pouvant correspondre aux positions ouverte et fermée de l'articulation 5.

Dans l'exemple de réalisation illustré ici, les logements 72 sont sensiblement cylindriques, de diamètres au moins légèrement supérieurs à la largeur des arbres 62. Ils ne sont pas débouchants afin qu'ils ne soient pas visibles, ce qui permet une plus grande liberté esthétique à l'articulation 5.

Alternativement, les logements 72 peuvent, selon une variante non illustrée ici, traverser la partie femelle 7 de part en part.

La partie femelle 7 comporte également des gouttières 91 ou rainures ou glissières en regard l'une de l'autre. Ces gouttières 91 débouchent d'un côté sur une des faces extérieure de la partie femelle 7 et débouchent de l'autre côté sur les logements 72. Ces gouttières définissent des moyens d'accès 9 des arbres 62 aux logements 72. Les gouttières 91 présentent une profondeur identique aux logements 72 correspondants. La largeur des gouttières 91 est configurée pour permettre le passage des arbres 62.

Dans l'exemple de réalisation illustré ici, les gouttières 91 présentent une largeur permettant l'insertion des arbres 62 suivant leur largeur de spatule la plus fine. Les arbres 62 ne peuvent donc pas pivoter lorsqu'ils sont dans les gouttières 91. Les gouttières 91 débouchent sur une face extérieure de l'articulation 5 orientée vers l'intérieur de la monture de lunettes 2, afin de limiter leur impact esthétique sur l'articulation 5 et la monture 2. Ainsi au porté de la monture, les gouttières 91 sont peu visibles.

La réservation 71 est configurée de manière à permettre le déplacement de l'excroissance 61 de la partie mâle 6 depuis l'extérieur de la partie femelle 7 vers sa position d'emboîtement permettant son pivotement. Ce déplacement intervient lorsque les arbres 62 se déplacent dans les gouttières 91 jusqu'aux logements 72.

La partie femelle 7 présente également une ou des faces extérieures 82,83 contre lesquelles vient s'appuyer l'organe de rappel élastique 81. Cette ou ces faces extérieures 82, 83 sont sensiblement perpendiculaires au plan de rotation P et leurs projetés normaux sur le plan de rotation P sont sécants dans ce plan.

Dans l'exemple de réalisation illustré ici, les lames ressorts 81 formant l'organe de rappel élastique 81 viennent en appui contre une seule surface 82,83 d'une face extérieure de la partie femelle 7 et se déforment élastiquement par rapport à leur état au repos. Bien entendu, il peut y avoir selon une alternative de réalisation deux surfaces 82,83 sensiblement parallèles coopérant avec chacune une lame ressort 81. La surface 82,83 contre laquelle chaque lame ressort 81 est en appui est sensiblement plate. Le contact des lames ressort 81 contre la surface 82,83 est accentué par l'effet de rappel élastique des lames ressort 81. L'organe de rappel élastique 81 coopérant avec les surfaces 82,83 correspondantes forme des moyens d'indexation 8 de l'articulation 5. L'articulation 5 est alors dans une position d'équilibre stable. Tout mouvement angulaire autour de cette position ramène l'articulation 5 vers cette position d'équilibre stable.

Dans l'exemple de réalisation illustré ici, la partie femelle 7 comporte une première surface 82 qui coopère avec l'organe de rappel élastique 81 pour former des moyens d'indexation 8 de l'articulation 5 dans une position d'équilibre stable ouverte. La monture 2 comportant l'articulation 5 dans cette position peut alors être portée sur le visage d'un utilisateur.

Une seconde surface 83 peut également coopérer avec l'organe de rappel élastique 81 pour former des moyens d'indexation 8 de l'articulation 5 dans une position d'équilibre stable fermée. La monture 2 comportant l'articulation 5 dans cette position est alors pliée et compacte pour faciliter son rangement. La première surface 82 et la seconde surface 83 sont alors conjointes, et partagent une arête 84 commune. Cette arête 84 est relativement plus éloignée de l'axe de rotation virtuel OO' de l'articulation 5 que la première 82 et seconde 83 surfaces. L'angle que forme la partie femelle 7 entre ces deux surfaces 82,83 au niveau de cette arête 84 est sensiblement identique à l'angle de passage de l'articulation 5 de la position ouverte à la position fermée autour de l'axe virtuel de rotation OO'. L'arête 84 dans cette configuration peut coopérer avec l'organe de rappel élastique 81 pour constituer des moyens d'indexation 8 de l'articulation 5 dans une position d'équilibre instable. Tout mouvement angulaire autour de cette position éloigne l'articulation 5 de cette position d'équilibre instable ; l'articulation 5 bascule alors vers la position ouverte ou la position fermée.

Lors du passage de l'articulation 5 de la position ouverte à la position fermée, l'organe de rappel élastique 81 vient en appui successivement contre la première surface 82, contre l'arête 84 et contre la seconde surface 83.

Ils constituent des guides de l'organe de rappel élastique 81 lors du fonctionnement de l'articulation. L'organe de rappel élastique 81 est également guidé par cet ensemble lors de l'assemblage de la partie mâle 6 dans la partie femelle 7. Les gouttières 91 guident les arbres 62 de la partie mâle 6 à travers la partie femelle 7 jusqu'aux logements 72.

Ces deux guidages conjoints provoquent l'écartement de l'organe de rappel élastique 81 des arbres 62 contre lequel il est en appui au repos. La force de rappel vers les positions d'équilibre stables ouverte et/ou fermée est alors plus importante. L'utilisateur peut identifier plus facilement les positions ouvertes et fermées de l'articulation 5, pour un ressenti plus qualitatif.

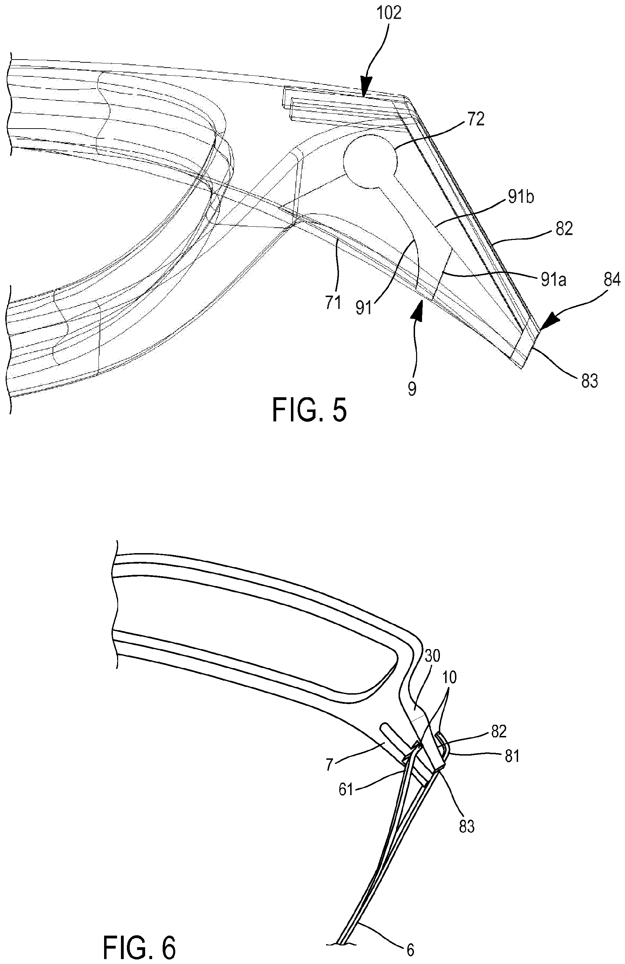

Selon un mode de réalisation de l'invention illustré ici, les gouttières 91 comportent deux portions successives 91a, 91b présentant chacune une direction différente, comme illustré par la figure 5. Chaque portion 91a, 91b est portée par un axe principal. Ces axes principaux sont inclus dans le plan de rotation P et sont sécants dans ce plan de rotation. Une première portion 91a présente une première extrémité débouchant sur une face de l'articulation 5 orientée vers l'intérieur de la monture de lunettes 2. L'axe principal de la première portion 91a fait un angle d'environ 90 degrés avec une ligne formée par une projection normale sur le plan de rotation P de la face de l'articulation 5 orientée vers l'intérieur de la monture 2. Cette première portion 91a est connectée par sa seconde extrémité via un coude à une première extrémité de la seconde portion 91b. Cette seconde portion 91b est reliée par sa seconde extrémité au logement 72 correspondant. L'axe principal de cette seconde portion 91b est sensiblement parallèle à la projection normale sur le plan de rotation P de la face de l'articulation 5 orientée vers l'intérieur de la monture 2. Le coude reliant les deux portions 91a, 91b est configuré de manière à permettre un passage de l'arbre 62 correspondant de la première à la seconde portion.

Le montage de l'articulation 5 peut se faire ainsi:
- On prend la partie mâle 6 et on écarte l'organe de rappel élastique 81 des arbres 62,
- on positionne les arbres 62 et l'excroissance 61 de la partie mâle en vis-à-vis respectivement des premières extrémités des premières portions 91a des gouttières 91 et de la réservation 71 de la partie femelle 7,
- on positionne l'organe de rappel élastique 81 en appui contre une face extérieure 83 de la partie femelle,
- on insère les arbres 62 dans les premières extrémités des premières portions 91a des gouttières 91 selon les axes principaux des premières portions 91a par une première translation,
- une fois que les arbres 62 ont atteint les coudes entre les deux portions 91a, 91b, on fait pivoter la partie mâle 6 par rapport à la partie femelle 7 pour disposer les arbres 62 face aux secondes portions 91b. On fait en même temps glisser l'organe de rappel élastique 81 contre l'arête 84 extérieure de la partie femelle 7,
- on insère les arbres 62 dans les secondes portions 91b des gouttières 91 selon les axes principaux des secondes portions 91b par une seconde translation, jusqu'à ce que les arbres 62 soient entrés dans les logements 72. En même temps l'organe de rappel élastique 81 glisse le long de l'arête 84 extérieure de la partie femelle 7 pour venir parallèlement en contact avec la première surface 82 extérieure de la partie femelle 7. L'articulation 5 se retrouve alors assemblée en position ouverte.

Le démontage de l'articulation 5 s'effectue en suivant en ordre inverse les étapes de montage à partir de l'articulation 5 positionnée en position ouverte.

La position des arbres 62 dans les logements 72 correspond à un écartement minimal entre les arbres 62 et l'organe de rappel élastique 81 lorsque l'articulation 5 est assemblée. L'effet de rappel élastique de ces lames ressort 81 incite l'articulation 5 à maintenir les arbres 62 dans les logements 72. Tout pivotement de l'articulation 5 depuis cette position fait s'écarter les arbres 62 de l'organe de rappel élastique 81, lequel est éloigné par le guidage des premières 82 et secondes 83 surfaces et par leur arête commune 84.

Bien entendu, il peut être envisagé selon un mode de réalisation non illustré ici que les gouttières 91 ne présentent pas deux portions successives d'orientation différentes 91a, 91b. On peut ainsi prévoir des gouttières 91 issues de la face interne de l'articulation 5 et débouchant directement dans les logements 72 avec un accès disposé entre la position ouverte et la position fermée de l'articulation 5. Cela simplifie le montage mais augmente les risques de démontage accidentels de l'articulation 5 lorsque les arbres 62 sont faces aux gouttières 91.

Dans l'exemple de réalisation illustré ici, lorsque l'articulation 5 est en position ouverte, les arbres 62 plats ont sensiblement la même orientation que la seconde portion des gouttières 91b. L'effet de rappel élastique constitue le seul moyen de maintien des arbres 62 dans les logements 72. L'entrée accidentelle des arbres 62 dans les gouttières 91 peut bloquer la rotation de l'articulation 5 ou cela peut mener à un démontage de l'articulation non voulu. Afin d'éviter ce risque, l'articulation 5 peut comporter en outre des moyens de verrouillage 10 des arbres 62 dans les logements 72 réciproques lorsque l'articulation 5 est en position ouverte. Ces moyens de verrouillage 10 sont définis par au moins une surface 102 de la partie femelle 7 sensiblement sur une face opposée à la partie mâle 6, sur laquelle se verrouille au moins un doigt 101 issu d'une des extrémités libres des lames ressort 81 de la partie mâle 6. Dans l'exemple illustré ici, on a deux doigts 101 issus chacun d'une des lames ressort 81, lesdits doigts étant en appui sur deux surfaces 102. Ces deux doigts 101 sont inclinés par rapport aux lames ressort 81 pour former un retour sensiblement parallèle à la face de la partie femelle 7 opposée à la partie mâle 6. Ces deux doigts sont en appui sur les surfaces 102.

Ces doigts 101 et surfaces 102 réciproques sont configurés de manière à ce qu'il soit nécessaire de décaler sensiblement latéralement les doigts 101 hors des surfaces 102 pour pouvoir faire glisser les arbres 62 hors des logements 72 vers les gouttières 91. Comme ces doigts 101 sont connectés aux lames ressort 81, il est donc nécessaire alors d'encore plus déformer élastiquement les lames ressort 81. On obtient donc simplement un moyen de verrouillage 10 des arbres 62 dans les logements 72 permettant d'éviter une entrée accidentelle des arbres 62 dans les gouttières 91.

Dans l'exemple de réalisation illustré ici, la partie femelle 7 est réalisée d'un seul tenant. Cela peut être fait par exemple en utilisant une technique de fabrication additive.

On peut ainsi réaliser simplement des gouttières 91 dont des portions 91a, 91b présentent des inclinaisons différentes non réalisables par une technique d'injection de matière thermoplastique traditionnelle.

La partie femelle 7 peut être réalisée par exemple en matériau thermoplastique ou thermodurcissable, ou bien en acier ou tout autre métal ou alliage, voire même en matériau composite ou céramique.

Dans l'exemple de réalisation illustré ici, la partie mâle 6 est réalisée d'un seul tenant. Cela peut être fait par exemple en découpant dans une plaque la forme de la branche 4 par découpe laser, ou par découpe chimique. Le matériau utilisé est un matériau présentant des caractéristiques d'effet de rappel élastique, comme par exemple un acier au carbone appelé communément « acier ressort », ou en matériau composite.

On peut ainsi réaliser par exemple les lames ressort 81 et l'excroissance 61 à plat en forme d'éventail, puis conformer les lames ressort 81 pour les positionner afin qu'elles soient en contact avec les arbres 62 de l'excroissance 61 de la partie mâle 6. On peut ensuite effectuer un traitement thermique apte à apporter un effet de rappel élastique, comme dans le cas par exemple d'une trempe pour un acier au carbone

Par l'agencement des différentes caractéristiques décrites précédemment, on obtient ainsi une articulation 5 de monture de lunettes 2 de faible épaisseur, simple à réaliser, en peu de pièces.

Il est de même aisé de réaliser par ce biais une monture de lunettes 2 fabriquée avec au moins une articulation 5 présentant une ou plusieurs des caractéristiques décrites précédemment.

Enfin, l'on peut réaliser simplement une paire de lunettes 1 en utilisant pour sa mise en oeuvre une monture de lunettes 2 avec au moins une articulation 5 présentant une ou plusieurs des caractéristiques décrites précédemment.

## Revendications

1. Articulation (5) de monture de lunettes (2) pivotant autour d'un axe virtuel de rotation (OO') dans un plan de rotation (P), l'articulation pouvant relier un tenon (30) d'une façade (3) à une branche (4), comportant :
- une partie femelle (7) accueillant une partie mâle (6), l'une pouvant être en lien avec le tenon (30) et l'autre avec la branche (4),
- la partie mâle (6) comportant des arbres (62) sensiblement perpendiculaires au plan de rotation (P) et diamétralement opposés entre eux,
- la partie mâle (6) comportant en outre un organe de rappel élastique (81) constitué d'au moins une lame à effet ressort (81) qui au repos est sensiblement en contact avec les arbres (62),
- la partie femelle (7) comportant des gouttières (91) en regard l'une de l'autre formant des moyens d'accès (9) des arbres (62) depuis l'extérieur de la partie femelle (7) vers des logements (72) dans lesquels les arbres (62) pivotent,
- la partie femelle (7) comportant en outre au moins une surface d'appui extérieure (82,83) coopérant avec l'organe de rappel élastique (81) pour former des moyens d'indexation (8) de l'articulation (5) dans au moins une position d'équilibre stable,
**caractérisée par le fait que** la ou les surface (s) d'appui extérieure(s) (82,83) et les gouttières (91) de la partie femelle forment également des guides d'écartement de l'organe de rappel élastique (81) par rapport aux arbres (62) .

2. Articulation (5) de monture de lunettes (2) selon la revendication 1, **caractérisée par le fait que** les arbres (62) ont une forme générale de spatules plates.

3. Articulation (5) de monture de lunettes (2) selon l'une des revendications précédentes, **caractérisée par le fait que** chaque gouttière (91) comporte deux portions successives (91a, 91b) d'axes principaux sécants et inclus dans le plan de rotation (P).

4. Articulation (5) de monture de lunettes (2) selon l'une des revendications précédentes, **caractérisée par le fait que** la partie femelle (7) comporte une première surface d'appui extérieure (82) coopérant avec l'organe de rappel élastique pour former des moyens d'indexation (8) de l'articulation (5) dans une position d'équilibre stable ouverte.

5. Articulation (5) de monture de lunettes (2) selon la revendication 4, **caractérisée par le fait que** la partie femelle (7) comporte une seconde surface d'appui extérieure (83) conjointe à la première surface d'appui extérieure (82) suivant une arête (84) commune, ladite seconde surface d'appui (83) coopérant avec l'organe de rappel élastique pour former des moyens d'indexation (8) de l'articulation (5) dans une position d'équilibre stable fermée.

6. Articulation (5) de monture de lunettes (2) selon la revendication 5, **caractérisée par le fait que** l'arête (84) entre la première (82) et la seconde (83) surface extérieure coopère avec l'organe de rappel élastique (81) pour former des moyens d'indexation (8) de l'articulation (5) dans une position d'équilibre instable.

7. Articulation (5) de monture de lunettes (2) selon l'une des revendications précédentes, **caractérisée par le fait qu'**un doigt (101) prolonge l'organe de rappel élastique (81) en formant un angle avec celui-ci et **par le fait qu'**il coopère avec une surface (102) de la partie femelle (7) située sensiblement à l'opposé de la partie mâle (6) pour former avec l'organe de rappel élastique (81) des moyens de verrouillage (10) des arbres (62) dans les logements (72) lorsque l'articulation (5) est en position ouverte.

8. Articulation (5) de monture de lunettes (2) selon l'une des revendications précédentes, **caractérisée par le fait que** la partie femelle (7) est réalisée d'un seul tenant notamment par fabrication additive.

9. Articulation (5) de monture de lunettes (2) selon l'une des revendications précédentes, **caractérisée par le fait que** la partie mâle (6) est réalisée d'un seul tenant notamment à partir d'une plaque découpée par découpe laser ou découpe chimique.

10. Monture de lunettes (2) comportant une articulation (5) selon l'une des revendications précédentes.

11. Paire de lunettes (1) comportant une monture de lunettes (2) selon la revendication 10.
